# EUROPÄISCHE PATENTSCHRIFT

(11) **EP 0 391 329 B1**
(45) Veröffentlichungstag und Bekanntmachung des Hinweises auf die Patenterteilung: **30.11.1994**
(21) Anmeldenummer: 90106329.7
(22) Anmeldetag: 03.04.1990
(51) Int. Cl.: C07F 9/48, C07F 9/46

(54) **Verfahren zur Herstellung von Alkylphosphonigsäurdiestern und/oder Dialkylphosphinigsäureestern**
Process for preparing alkylphosphonous acids diesters and/or dialkylphosphinous acids esters
Procédé de préparation de diesters d'acides alkylphosphoneux et/ou d'esters acides dialkylphosphineux

(30) Priorität: 07.04.1989 DE 3911230
(43) Veröffentlichungstag der Anmeldung: 10.10.1990
(73) Patentinhaber: HOECHST AKTIENGESELLSCHAFT, 65926 Frankfurt am Main (DE)
(72) Erfinder: Scheffel, Günter, Dr., D-8263 D-8263 Burghausen (DE); Thiele, Michael, D-8269 Burgkirchen (DE)

(56) Entgegenhaltungen:
- DE-A- 3 521 770
- HOUBEN-WEYL: "Methoden der organischen Chemie", 4. Auflage, Band XII, Teil 2,1964, hrsg. von E. MÜLLER, Thieme, Stuttgart, DE
- CHEMISCHE BERICHTE, Band 93, Nr. 5, 1960, Seiten 1013-1256; M. SANDER: "Herstellung und Reaktionen von Phosphonig- und Phosphinigsäureestern"
- JOURNAL OF THE CHEMICAL SOCIETY, SECTION C: ORGANIC CHEMISTRY, 1968, pages 839-842; A.D. BROWN et al.: "Structural effects in reactions of organophosphoruscompounds. II. Reaction of Grignard reagents with phosphonic dichlorides"

## Beschreibung

Die Erfindung betrifft ein Verfahren zur Herstellung von Alkylphosphonigsäuredialkylestern und/oder Dialkylphosphinigsäuremonoalkylestern aus den entsprechenden Chlorphosphonigsäuredialkylestern beziehungsweise Dichlorphosphinigsäuremonoalkylestern.

Die Herstellung von Chlorphosphonigsäurediestern oder Dichlorphosphinigsäuremonoestern durch Umsetzung von Phosphortrichlorid mit den zur Bildung dieser Ester notwendigen Mengen eines symmetrischen Trialkylphosphits ist bekannt. Nach DE 26 43 474-C2 wird die Umsetzung bei -15 bis +75 °C in Gegenwart einer wasserhaltigen, quartären Verbindung des Stickstoffs oder des Phosphors durchgeführt. Nach DE 26 43 442-C2 wird im gleichen Temperaturbereich in Gegenwart eines polaren, aprotischen Lösungsmittels gearbeitet. Ähnlich wird nach DE 26 36 270-A1 verfahren, wobei anstelle des symmetrischen Trialkylphosphits auch Chlorphosphonigsäuredialkylester mit Phosphortrichlorid umgesetzt werden können.

Die Herstellung von Alkylphosphonigsäurediestern durch Umsetzung von Chlorphosphonigsäurediestern mit Alkylmagnesiumhalogenid, beispielsweise Methylmagnesiumiodid in Diethylether bei -60 bis -65 °C beschreiben M. I. Kabachnik und E. N. Tsvetkov, Doklady Akad. Nauk. S.S.S.R 117 (1957), Seiten 817 bis 820 (C.A. 52/8070c).

Nach M. Sander, Ber. 93, Seite 1220 ff. (siehe auch DE-AS 1 084 263) werden Dialkylphosphinigsäuremonoester durch Umsetzung von Dichlorphosphinigsäuremonoestern mit 2 mol Alkylmagnesiumchlorid in Diethylether bei -50 bis +35 °C erhalten, wobei es wesentlich ist, die etherische Lösung des Alkylmagnesiumchlorids so zuzugeben, daß im Reaktionsgefäß während der Zugabe stets ein Überschuß von Dichlorphosphinigsäuremonoester vorhanden ist. Alkylmagnesiumbromide geben schlechte oder gar keine Ausbeuten.

Für die Umsetzung mit Alkylmagnesiumchloriden ist es wichtig, daß sehr reine Chlorphosphonigsäurediester oder Dichlorphosphinigsäuremonoester verwendet werden, wobei die Reinigung dieser Substanzen drei bis vier Destillationen erfordert und daher zeitraubend und unwirtschaftlich ist (Ber. 93, Seite 1222, Absatz 2).

M. I. Kabachnik und E. N. Tsvetkov, Doklady Akad. Nauk. S.S.S.R 135 (1960), Seiten 323 bis 326 (C.A. 55/14288f) führen die Umsetzung mit Alkylmagnesiumbromid oder -chlorid in Gegenwart von Pyridin durch, wobei sie eine Ausbeuteverbesserung erzielen. Sie berichten jedoch, daß die Dimethylphosphinigsäuremonoester auf diese Weise nicht herstellbar sind.

Aufgabe der vorliegenden Erfindung ist es, ein Verfahren bereitzustellen, mit dem aus symmetrischem Trialkylphosphit durch Reaktion mit Dichlorphosphinigsäuremonoester oder mit Phosphortrichlorid oder mit Mischungen der beiden letztgenannten Verbindungen und nachfolgende Umsetzung mit Alkylmagnesiumchlorid oder -bromid ohne umständliche Reinigung von Zwischenprodukten Alkylphosphonigsäuredialkylester oder Dialkylphosphinigsäuremonoalkylester oder Mischungen der beiden letztgenannten Verbindungen hergestellt werden können, wobei auch die Erzeugung von Methylphosphonigsäuredialkylestern oder Dimethylphosphinigsäuremonoalkylestern oder Mischungen der beiden letztgenannten Verbindungen mögiich ist.

Das neue Verfahren zur Herstellung von mindestens einer Verbindung der Formel

RₙP(OR′)₃₋ₙ (1),

in der bedeutet
- R: eine Alkylgruppe mit 1 bis 4 C-Atomen, eine Vinylgruppe oder eine Allylgruppe
- R′: eine Alkylgruppe mit 1 bis 4 C-Atomen, eine Chloralkylgruppe mit 2 bis 4 C-Atomen oder eine Bromalkylgruppe mit 2 bis 4 C-Atomen
- n: = 1 oder 2
durch Reaktion von mindestens einer Verbindung der Formeln

PCl₃ (2)

oder

Cl₂POR′ (3),

oder Mischungen der Verbindungen der Formeln (2) und (3), mit einer Verbindung der Formel

P(OR′)₃ (4),

wobei R′ in den Formeln (3) und (4) die oben angegebene Bedeutung hat, nach Beendigung dieser Reaktion Umsetzung des Reaktionsproduktes oder der Reaktionsprodukte der Formel

ClₙP(OR′)₃₋ₙ (5),

worin R′ und n die oben angegebene Bedeutung haben, mit einer Verbindung der Formel

XMgR (6),

worin X = Cl oder Br bedeutet und R die oben angegebene Bedeutung hat, danach Abtrennung der entstandenen Verbindungen der Formel (1) aus dem Umsetzungsgemisch durch Destillation, ist dadurch gekennzeichnet, daß je 1 mol der Verbindung (2) 0,5 bis 2,1 mol der Verbindung (4) und/oder je 1 mol der Verbindung (3) 0,1 bis 1,1 mol der Verbindung (4) bei -20 bis +100 °C zur Reaktion gebracht werden, nach Beendigung der Reaktion eine Temperatur von -60 bis +50 °C eingestellt wird, das Reaktionsgemisch ohne vorherige Abtrennung und Reinigung eines Reaktionsproduktes unter Aufrechterhaltung der eingestellten Temperatur und intensiver Durchmischung mit 1 bis 1,1 mol einer weitgehend in Lösung vorliegenden Verbindung (6), je 1 g-Atom des im Reaktionsgemisch der Verbindung (4) mit der Verbindung (2) oder der Verbindung (3) oder Mischungen der beiden letztgenannten Verbindungen vorliegenden an Phosphor gebundenen Chlors, in Kontakt gebracht wird, anschließend während 0 bis 3 Stunden die eingestellte Temperatur aufrechterhalten oder auf 10 bis 30 °C eingestellt wird und dann die Abtrennung der entstandenen Verbindung(en) (1) vorgenommen wird.

Das neue Verfahren beinhaltet zwei verschiedene Reaktionen, die nacheinander im gleichen Reaktionsraum durchgeführt werden. Zunächst werden je 1 mol Phosphortrichlorid 0,5 bis 2,1 mol Trialkylphosphit der Formel (4) zur Reaktion gebracht. Es können auch mehr als 2,1 mol Trialkylphosphit verwendet werden, jedoch erhöht dies im allgemeinen den späteren Destillationsaufwand. Das Trialkylphosphit kann 1 bis 4 C-Atome in den Alkylgruppen oder Chloralkylgruppen mit 2 bis 4 C-Atomen oder Bromalkylgruppen mit 2 bis 4 C-Atomen enthalten. Vorzugsweise wird ein solches Trialkylphosphit eingesetzt, dessen Alkylgruppen jeweils 1 bis 4 C-Atome enthalten oder das 2-Chlorethylgruppen enthält. Die Alkylgruppe kann geradkettig oder verzweigt sein. Sofern das Trialkylphosphit Halogenalkylgruppen enthält, kann das Halogen an jedem C-Atom gebunden sein, außer dem C-Atom, das mit Sauerstoff verbunden ist. Obwohl auch einerseits Gemische verschiedener Trialkylphosphite der Formel (4) wie auch andererseits Gemische von Phosphortrichlorid und Dichlorphosphinigsäuremonoestern eingesetzt werden können, wird vorzugsweise nur jeweils eine Verbindung der beiden Reaktionspartner verwendet.

Anstelle von Phosphortrichlorid können vorteilhaft die Dichlorphosphinigsäuremonoalkylester der Formel (3) eingesetzt werden, wobei in diesem Fall je 1 mol Dichlorphosphinigsäuremonoalkylester der Formel (3) 0,1 bis 1,1 mol Trialkylphosphit der Formel (4), wie weiter oben näher beschrieben, umgesetzt werden. In einer bevorzugten Ausführungsform des erfindungsgemäßen Verfahrens werden solche Dichlorphosphinigsäuremonoalkylester (3) verwendet, die durch Umsetzung von 1 mol Phosphortrichlorid mit 1 bis 1,5 mol, vorzugsweise 1 bis 1,2 mol, eines Alkanols der Formel R′OH unter Abtrennung des entstehenden Chlorwasserstoffs durch Abtreiben vermittels Druckabsenkung und/oder mit Inertgas, beispielsweise Stickstoff, oder durch Salzbildung, beispielsweise mit einem tertiären Amin erzeugt wurden. Ein Überschuß von bis zu 0,5 mol Alkanol pro mol Phosphortrichlorid führt zur anteiligen Bildung von Chlorphosphonigsäurediester, dessen Anteil zweckmäßig bei der nachfolgenden Umsetzung mit Trialkylphosphit berücksichtigt wird. In der Formel R′OH bedeutet R′ eine Alkylgruppe mit 1 bis 4 C-Atomen, eine Chloralkylgruppe mit 2 bis 4 C-Atomen oder eine Bromalkylgruppe mit 2 bis 4 C-Atomen, in denen das Halogenatom nicht an dem Kohlenstoffatom gebunden ist, das die OH-Gruppe trägt.

Sofern Dialkylphosphinigsäuremonoalkylester, das sind Verbindungen der Formel (1), in denen n = 2 ist, hergestellt werden sollen, werden vorteilhaft je 1 mol Phosphortrichlorid (2) 0,5 mol Trialkylphosphit (4) umgesetzt. Wenn Alkylphosphonigsäuredialkylester, das sind Verbindungen der Formel (1), in denen n = 1 ist, hergestellt werden sollen, werden vorteilhaft je 1 mol Phosphortrichlorid (2) 2 bis 2,1 mol Trialkylphosphit (4) oder je 1 mol Dichlorphosphinigsäureester (3) 1 bis 1,1 mol Trialkylphosphit (4) umgesetzt. Wird auf 1 mol Phosphortrichlorid eine Menge Trialkylphosphit eingesetzt, die zwischen 0,5 und 2,0 mol Trialkylphosphit liegt, werden Mischungen von Dichlorphosphinigsäuremonoalkylester und Chlorphosphonigsäuredialkylester erhalten, deren Mischungsverhältnis aus der Menge des verwendeten Trialkylphosphits resultiert. Das gleiche gilt, wenn je 1 mol Dichlorphosphinigsäuremonoalkylester eine Menge Trialkylphosphit verwendet wird, die zwischen 0,1 und 1 mol liegt. Es kann vorteilhaft sein, zunächst solche Mischungen herzustellen, diese dann, wie nachfolgend beschrieben, mit einer entsprechenden Menge einer Verbindung der Formel XMgR (6) umzusetzen und das aus dieser Reaktion entstandene Gemisch von Dialkylphosphinigsäuremonoalkylester und Alkylphosphonigsäuredialkylester anschließend in die Einzelkomponenten zu trennen, beispielsweise durch fraktionierte Destillation.

Die Reaktion des Trialkylphosphits (4) mit Phosphortrichlorid (2) und/oder den Dichlorphosphinigsäuremonoalkylestern (3) wird bei einer Temperatur von -20 bis +100 °C durchgeführt. Oberhalb 100 °C treten im allgemeinen zu viel störende Nebenreaktionen auf, die zu unerwünschten Produkten und damit zu Ausbeuteverlusten führen, unter -20 °C ist im allgemeinen die Reaktionsgeschwindigkeit unnötig langsam. Zweckmäßig wählt man, wenn Verbindungen eingesetzt werden, in denen R′ eine Methyl- oder Ethylgruppe bedeutet, niedrigere Reaktionstemperaturen, als bei solchen Verbindungen, in denen R′ eine Alkylgruppe mit 3 bis 4 C-Atomen bedeutet. Vorzugsweise werden Reaktionstemperaturen von 20 bis 50 °C angewendet. Gute Ergebnisse werden erhalten, wenn bei der Reaktion polare aprotische Lösungsmittel, wie sie in DE 26 43 442-C2 beschrieben sind, zugesetzt werden.

In einer bevorzugten Ausführungsform des erfindungsgemäßen Verfahrens wird die Reaktion der Verbindungen der Formeln PCl₃ (2) oder Cl₂POR′ (3) oder von Mischungen dieser beiden mit der Verbindung der Formel P(OR′)₃ (4) in Gegenwart von 1 bis 10 Gew.-%, bezogen auf die Summe der Verbindungen PCl₃ + Cl₂POR′ + P(OR′)₃ von mindestens einer Verbindung der Formel 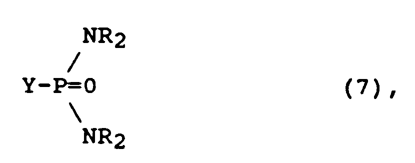
in der bedeuten,
- Y =: Alkyl mit 1 bis 6 C-Atomen, Phenyl- oder NR₂
- R =: Alkyl mit 1 bis 4 C-Atomen, wobei R₂ auch ein Butylen-(1,4)-Radikal bedeuten kann,
durchgeführt. Besonders bevorzugt werden 3 bis 6 Gew.-% der genannten Verbindungen angewendet. Besonders gute Ergebnisse werden mit Phosphorsäuretri(dimethylamid) erzielt.

Die Reihenfolge, in der die Verbindungen der Formeln PCl₃ beziehungsweise Cl₂POR′ sowie auch deren Mischungen als eine Komponente und P(OR′)₃ als andere Komponente angewendet werden, ist nicht kritisch, doch sollte das aprotische polare Lösungsmittel in Mischung mit der vorgelegten Komponente vorliegen und die Zugabe der anderen Komponente unter Durchmischung, beispielsweise durch Rühren, so geschehen, daß keine wesentlichen Abweichungen von der gewhälten Reaktionstemperatur, beispielsweise durch plötzliche örtliche Erhitzung, auftreten. Nachdem die beiden Reaktionskomponenten zusammengegeben werden, kann eine Nachreaktionsdauer von 5 bis 60 Minuten nützlich sein, sie ist jedoch nicht in allen Fällen erforderlich.

Das, wie in den vorstehenden Abschnitten beschrieben, hergestellte Reaktionsgemisch aus PCl₃ (2) beziehungsweise Cl₂POR′ (3) oder deren Mischungen und P(OR′)₃ (4) wird erfindungsgemäß ohne Isolierung von Reaktionsprodukten der Formel ClₙP(OR′)₃₋ₙ (5), in der R′ und n die weiter oben angegebene Bedeutung haben, mit einer Verbindung der Formel XMgR (6), worin X = Cl oder Br bedeutet und R die oben angegebene Bedeutung hat, umgesetzt. Vorteilhaft werden vor Zugabe der Verbindung der Formel XMgR (6) dem Reaktionsgemisch der phosphorhaltigen Verbindungen auf 1 Gew.-Teil dieses Gemisches 2 bis 15 Gew.-Teile eines wasserfreien aprotischen Lösungsmittels zugesetzt, dessen Siedepunkt um mindestens 20 °C über dem Siedepunkt der am höchsten siedenden Verbindung der Formel RₙP(OR′)₃₋ₙ (1), die hergestellt werden soll, liegt. Das wasserfreie aprotische Lösungsmittel soll bei +50 °C, vorzugsweise bei +15 °C, flüssig sein. Der Siedepunkt des aprotischen Lösungsmittels ist nach oben dadurch begrenzt, daß bei der späteren Abdestillation der Verbindung(en) der Formel (1) die Sumpftemperatur nicht die thermische Belastbarkeit dieser Verbindungen überschreiten soll. Im allgemeinen sollte der Siedepunkt des aprotischen Lösungsmittels bei 133 Pa, je nach erzeugter Verbindung der Formel (1), 60 bis 150 °C nicht überschreiten. Die Zugabe des Lösungsmittels erfolgt zweckmäßig nach dem Ende der Reaktion der phosphorhaltigen Verbindungen, sie kann aber auch ganz oder teilweise schon während oder vor dieser Reaktion erfolgen, insbesondere dann, wenn es die Aufrechterhaltung der Rührfähigkeit der Suspension erfordert. Bevorzugt werden 4 bis 10 Gew.-Teile des wasserfreien, aprotischen Lösungsmittels pro Teil Reaktionsprodukt eingesetzt.

Geeignete aprotische Lösungsmittel sind beispielsweise höhersiedende Kohlenwasserstoffe und Ether, wie Toluol, Xylol, Tetralin, Dekalin, Di-n-propylether, Dibutylether, die Dimethyl- und Diethylether des Ethylenglykols und Diethylenglykols, Triethylenglykoldimethylether, Tetraethylenglykoldimethylether. Die Auswahl eines geeigneten aprotischen Lösungsmittels sei an folgenden Beispielen erläutert: Soll Dimethylphosphinigsäuremethylester erzeugt werden, das den niedrigsten Siedepunkt (56,7 °C bei 98 kPa) aller erfindungsgemäß herzustellenden Produkte aufweist, eignet sich als aprotisches Lösungsmittel Di-n-propylether (Siedepunkt 90 °C bei 98 kPa). Dieses Lösungsmittel wäre auch für das zur Herstellung des obengenannten Phosphinigsäureesters notwendige Methylmagnesiumchlorid oder -bromid geeignet. Wenn Dimethylphosphinigsäureisobutylester (Siedepunkt 132 °C bei 98 kPa) erzeugt werden soll, würde sich als zuzusetzendes aprotisches Lösungsmittel beispielsweise Diethylenglykoldimethylether (Siedepunkt 162°C bei 98 kPa) eignen, wobei die Destillation zweckmäßig unter vermindertem Druck erfolgt, um die thermische Belastung des Destillationssumpfes möglichst klein zu halten. Für die Herstellung von Methylphosphonigsäurediisobutylester (Siedepunkt 39 bis 40 °C bei 133 Pa) käme beispielsweise Tetraethylenglykoldimethylether (Siedepunkt 78 °C bei 133 Pa) in Frage.

Das Reaktionsgemisch der phosphorhaltigen Verbindungen wird, bevor es mit der Verbindung der Formel XMgR (6) in Kontakt kommt, auf eine Temperatur von -60 bis +50 °C eingestellt. Unter -60 °C läuft im allgemeinen die nachfolgende Reaktion zu langsam, oberhalb +50 °C treten unerwünschte Nebenreaktionen auf, zum Beispiel können, abhängig von der Zahl der C-Atome, Esterbindungen gespalten werden, wobei Verbindungen des fünfwertigen Phosphors und Phosphine gebildet werden. Vorzugsweise wird das phosphorhaltige Reaktionsgemisch auf eine Temperatur von -20 bis +20 °C gebracht, wobei bei Methyl und Ethylestern bevorzugt die niedrigeren Temperaturen eingestellt werden. Nun werden je 1 g-Atom des im Reaktionsgemisch der Verbindung (4) mit der Verbindung (2) oder der Verbindung (3) vorliegenden an Phosphor gebundenen Chlors 1 bis 1,1 mol einer weitgehend in Lösung vorliegenden Verbindung der Formel XMgR (6) mit dem Reaktionsgemisch in Kontakt gebracht. Vorteilhaft werden 1 bis 1,05 mol einer weitgehend in Lösung vorliegenden Verbindung der Formel XMgR (6) eingesetzt. Während der Reaktion sollte die vorher eingestellte Temperatur durch entsprechende Zugabegeschwindigkeit und Kühlung etwa aufrechterhalten werden. Eine intensive Durchmischung der reagierenden Komponenten, beispielsweise durch schnelles turbulentes Rühren, steigert die Ausbeute an der gewünschten Verbindung der Formel RₙP(OR′)₃₋ₙ (1) wesentlich.

Im allgemeinen wird man die Lösung der Verbindung XMgR (6) langsam in das Gemisch der phosphorhaltigen Verbindungen eintragen, es ist jedoch auch die umgekehrte Arbeitsweise, Lösung der Verbindung XMgR (6) vorlegen und Reaktionsgemisch der phosphorhaltigen Verbindungen eintragen, möglich. Als Lösungsmittel für die Verbindung XMgR kommen in erster Linie Ether, wie Diethylether, Diisopropylether, Di-n-propylether oder Dibutylether in Frage, wegen der guten Löslichkeit und Wirkung werden Lösungen in Tetrahydrofuran bevorzugt eingesetzt. Ferner werden bevorzugt Verbindungen der Formel XMgR verwendet, in denen R = Methyl oder Ethyl ist. Auch Verbindungen der Formel XMgR, in denen X Chlor bedeutet, sind bevorzugt.

Sofern Verbindungen der Formel RₙP(OR′)₃₋ₙ (1) hergestellt werden sollen, die niedrige Alkylreste R und/oder R′ enthalten, beispielsweise Methyl oder Ethyl, empfiehlt es sich, die Umsetzung mit der Verbindung der Formel XMgR im unteren Temperaturbereich, das heißt zwischen -60 und +20 °C, vorzunehmen, wenn Verbindungen der Formel (1) hergestellt werden sollen, mit höheren Alkylresten wird zweckmäßig der höhere Temperaturbereich von etwa 0 bis +50 °C gewählt.

Nachdem die Gesamtmenge der Verbindung XMgR mit dem phosphorhaltigen Reaktionsgemisch in Kontakt gebracht wurde, kann mit der Abtrennung der gewünschten Verbindungen der Formel (1) begonnen werden. Häufig ist es vorteilhaft, vor Abtrennung dieser Verbindungen noch eine Nachreaktionszeit von bis zu 3 Stunden, vorzugsweise bis zu 1 Stunde, anzuwenden, während der die Temperatur entweder auf dem ursprünglich eingestellten Wert gehalten oder auf 10 bis 30 °C eingestellt wird.

In einigen Fällen kann es zweckmäßig sein, nach Zugabe der Verbindung XMgR eine weitere Verbindung zuzugeben, die mit der während der Reaktion entstandenen Verbindung MgX₂ einen Komplex bildet, beispielsweise Pyridin oder Dioxan. Dies kann insbesondere bei Verwendung von Alkylmagnesiumbromiden zur Steigerung der Ausbeute an den erwünschten Verbindungen der Formel RₙP(OR′)₃₋ₙ (1) beitragen.

Nach Beendigung der Reaktion zwischen der Verbindung XMgR und dem phosphorhaltigen Reaktionsgemisch und gegebenenfalls einer Nachreaktionszeit werden zweckmäßig zunächst die gesamten flüchtigen Stoffe aus der Reaktionsmischung abdestilliert, wobei, je nach eingesetzten Reaktionskomponenten, eine Sumpftemperatur von +60 bis +150 °C nicht überschritten werden sollte, wobei wiederum bei Verbindungen mit niedrigen Alkylresten auch die niedrigeren Sumpftemperaturen zu wählen sind. Zweckmäßig wird bei der Destillation von Verbindungen der Formel (1) mit höherem Siedepunkt verminderter Druck angewendet, um bei möglichst niedriger Sumpftemperatur möglichst alle Anteile der Verbindung der Formel (1) aus der Reaktionsmischung zu entfernen. In manchen Fällen kann es vorteilhaft sein, ausgefallene feste Anteile aus der Reaktionsmischung, beispielsweise durch Filtration, abzutrennen, bevor mit der Abdestillation der flüchtigen Anteile begonnen wird. Die nach der Destillation erhaltene Mischung aller flüchtigen Bestandteile wird dann auf üblichem Wege durch fraktionierte Destillation in die einzelnen Komponenten getrennt, wobei nicht umgesetzte Reaktionskomponenten, das Lösungsmittel für die Verbindung XMgR, wie auch das aprotische Lösungsmittel, das der Reaktionsmischung der phosphorhaltigen Verbindungen vor Zugabe der Verbindung XMgR zugesetzt wird, wieder verwendet werden können. Es werden ein oder zwei Fraktionen gewonnen, die hauptsächlich Dialkylphosphinigsäuremonoalkylester, Alkylphosphonigsäuredialkylester oder beide enthalten. Sie können nach Bedarf durch erneute fraktionierte Destillation weiter gereinigt werden. In manchen Fällen kann die abdestillierte Mischung der Lösungsmittel und phosphorhaltigen Verbindungen ohne Reinigung für weitere Umsetzungen verwendet werden.

Die beiden erfindungsgemäß nacheinander im gleichen Reaktionsraum durchgeführten Reaktionen werden unter Ausschluß von Sauerstoff und weitgehendem Ausschluß von Wasser (Feuchtigkeit) mit möglichst trockenen Reagenzien in einer trockenen Atmosphäre, beispielsweise Stickstoff, vorgenommen. Das gleiche gilt auch für Aufarbeitung des Reaktionsgemisches.

Die erfindungsgemäß hergestellten Alkylphosphonigsäuredialkylester beziehungsweise Dialkylphosphinigsäuremonoalkylester sind wertvolle Zwischenprodukte zur Herstellung von beispielsweise Flammschutzmitteln oder Pflanzenschutzmitteln.

Wie bereits weiter oben erwähnt, ermöglicht es das erfindungsgemäße Verfahren, Alkylphosphonigsäuredialkylester und Dialkylphosphinigsäuremonoalkylester ohne umständliche und kostspielige Reinigung von Zwischenprodukten herzustellen, wobei insbesondere auch die technisch wichtigen Methylverbindungen in guter Ausbeute erhältlich sind.

Nachfolgende Beispiele sollen die Erfindung näher erläutern.

### Beispiel 1

Ein 4-Hals-Kolben mit Thermometer, Rührer, Gaseinleitungsrohr und einem Aufsatz, der einen Tropftrichter und ein Gasableitungsrohr enthält, wird mit trockenem Stickstoff gespült und während den nachfolgend beschriebenen Reaktionen unter leichtem Stickstoffstrom gehalten. Nun werden 47,4 g (= 0,28 mol) Triethylphosphit (98%ig) und 2,2 g Hexamethylphosphorsäuretrisamid vorgelegt. Unter Rühren werden innerhalb 20 min 19,6 g Phosphortrichlorid (98%ig = 0,14 mol) tropfenweise in den Kolben eingetragen und vermittels einer Kühlung die während der Reaktion ansteigende Temperatur auf +40 °C gehalten, anschließend wird noch 1 Stunde weitergerührt, wobei der Kolbeninhalt auf +20 °C abkuhlt. - Es werden auf 1 mol Phosphortrichlorid 2 mol Triethylphosphit und 3,3 Gew.-% Hexamethylphosphorsäuretrisamid, bezogen auf die Summe von Phosphortrichlorid und Triethylphosphit verwendet.

Die Temperatur des Kolbeninhaltes wird auf -20 °C gesenkt. Nun werden 283 g über metallischem Natrium getrockneter und destillierter Diethylenglykoldimethylether zugegeben, der Tropftrichter ausgewechselt, an den Aufsatz eine für Vakuumbetrieb geeignete Destillationseinrichtung angeschlossen, deren Vorlage mit einer Mischung aus Aceton und festem Kohlendioxid gekühlt wird. Unter Einhaltung von -20 °C werden unter turbulentem Rühren 129 g einer Lösung, die 25,4 Gew.-% Methylmagnesiumchlorid in Tetrahydrofuran enthält, tropfenweise eingetragen, wobei ausfallendes Magnesiumchlorid in der Reaktionsmischung dispergiert verbleibt. Nach Beendigung des Eintropfens wird die Kühlung des Kolbens entfernt und der Kolben innerhalb 1 Stunde unter Erwärmung auf +20 °C gerührt. - Es werden je 1 Gew.-Teil der Reaktionsmischung aus Triethylphosphit und Phosphortrichlorid 4,3 Gew.-Teile Diethylenglykoldimethylether (Kp bei 98 kPa circa 162 °C) und je 1 g-Atom an Phosphor gebundenes Chlor 1,05 mol Methylmagnesiumchlorid angewendet.

Nach Ablauf der Nachreaktionszeit wird der Druck in der Reaktionsapparatur auf 2 kPa gesenkt, wobei die am leichtesten siedenden Anteile des Kolbeninhaltes in die Destillationsvorlage übergehen. Die Temperatur des Kolbeninhaltes wird nun langsam auf 65 °C (dem Siedepunkt des Diethylenglykoldimethylethers beim angewendeten Druck) gesteigert und gehalten, solange der Kolbeninhalt noch rührfähig bleibt. Dann wird die Destillation beendet.

Es werden 300,9 g Destillat erhalten, das nach Kernresonanz-Spektralanlayse (NMR) folgende Zusammensetzung aufweist:
50,1 g CH₃P(OC₂H₅)₂ (Kp bei 98 kPa circa 116 °C)
3,8 g P(OC₂H₅)₃
0,8 g (CH₃)₂P(OC₂H₅)
0,2 g (CH₃)₃P
96,0 g Tetrahydrofuran
150,0 g Diethylenglykoldimethylether
Auf den in den eingesetzten Verbindungen P(OC₂H₅)₃ und PCl₃ enthaltenen dreiwertigen Phosphor bezogen, beträgt die Ausbeute an CH₃P(OC₂H₅)₂ 87,1 %.

Das erhaltene Destillat kann ohne merkliche Verluste fraktioniert werden, wobei P(OC₂H₅)₃ zurückgewonnen wird. Unter Berücksichtigung der rückgewonnenen Ausgangssubstanz beträgt, bezogen auf eingesetzten dreiwertigen Phosphor, die Ausbeute an CH₃P(OC₂H₅)₂ 92,1 %.

Das Destillat kann ohne weitere Reinigung für chemische Umsetzungen zur Herstellung, zum Beispiel von Pflanzenschutzmitteln oder Flammschutzmitteln, verwendet werden.

### Beispiel 2

Es wird verfahren wie in Beispiel 1 beschrieben, mit folgenden Änderungen:
52,5 g P(OCH₃)₃ (98%ig = 0,415 mol) und 3,4 g Hexamethylphosphorsäuretrisamid werden vorgelegt, bei konstant gehaltenen +50 °C 73,5 g Dichlorisobutoxyphosphan Cl₂POC₄H₉-iso (98%ig = 0,422 mol) zugetropft, 1 Stunde bei +50 °C unter Rühren gehalten, auf -20 °C abgekühlt, 325 g Diethylenglykoldimethylether zugegeben, bei -20 °C 251,5 g Lösung, die 25,4 Gew.-% CH₃MgCl (= 63,88 g = 0,854 mol) in Tetrahydrofuran enthält, zugetropft, unter Erwärmung auf +20 °C 1 Stunde nachgerührt und, wie in Beispiel 1 beschrieben, destilliert.

Es werden angewendet:
Auf 1 mol Cl₂POC₄H₉-iso 0,98 mol P(OCH₃)₃.

2,7 Gew.-% Hexamethylphosphorsäuretrisamid, bezogen auf Cl₂POC₄H₉-iso + P(OCH₃)₂-Mischung.

Auf 1 Gew.-Teil der zuvor beschriebenen Mischung 2,6 Gew.-Teile Diethylenglykoldimethylether und auf 1 g-Atom an Phosphor gebundenes Chlor 1,01 mol CH₃MgCl.

Es werden 471 g Destillat folgender Zusammensetzung erhalten:
32,9 g CH₃P(OCH₃)₂ (Kp bei 98 kPa circa 88 °C)
45,0 g CH₃P(OCH₃)(OC₄H₉-iso)
12,3 g P(OCH₃)₃
1,9 g (CH₃)₂P(OCH₃)
2,8 g (CH₃)₂POC₄H₉-iso
187,0 g Tetrahydrofuran
190,0 g Diethylenglykoldimethylether
Ausbeute an CH₃P(OCH₃)₂ + CH₃P(OCH₃)(OC₄H₉-iso), bezogen auf eingesetzten dreiwertigen Phosphor: 72,2 %. Unter Berücksichtigung des rückgewinnbaren P(OCH₃)₃: 81,9 %.

### Beispiel 3

Es wird verfahren wie in Beispiel 1 beschrieben, mit folgenden Änderungen:
52,5 g P(OCH₃)₃ (98%ig = 0,415 mol) und 2,3 g Hexamethylphosphorsäuretrisamid Werden vorgelegt, bei konstant gehaltenen +40 °C 28,4 g PCl₃ (98%ig = 0,203 mol) zugetropft, 1 Stunde bei +40 °C unter Rühren gehalten, auf +20 °C gekühlt, 307 g Triethylenglykoldimethylether (Kp bei 98 kPa circa 226 °C) zugegeben, bei +20 °C 293,5 g Lösung, die 24,7 Gew.-% C₄H₉MgCl (= 72,49 g = 0,6202 mol) in Tetrahydrofuran enthält, zugetropft, 2 Stunden nachgerührt und, wie in Beispiel 1 beschrieben, destilliert, wobei der Kolbeninhalt bis auf 110 °C (dem Siedepunkt des Triethylenglykoldimethylethers bei 266 Pa Druck) erwärmt wird.

Es werden angewendet:
Auf 1 mol PCl₃ 2,045 mol P(OCH₃)₃.

2,7 Gew.-% Hexamethylphosphorsäuretrisamid, bezogen auf PCl₃ + P(OCH₃)₃-Mischung.

Auf 1 Gew.-Teil der beschriebenen Mischung 3,8 Gew.-Teile Triethylenglykoldimethylether und auf 1 g-Atom an Phosphor gebundenes Chlor 1,02 mol C₄H₉MgCl.

Es werden 337,3 g Destillat folgender Zusammensetzung erhalten:
71,4 g C₄H₉P(OCH₃)₂ (Kp bei 98 kPa circa 157 °C)
13,2 g (C₄H₉)₂POCH₃ (Kp bei 98 kPa circa 201 °C)
221,0 g Tetrahydrofuran
31,9 g Triethylenglykoldimethylether
Ausbeute an C₄H₉P(OCH₃)₂, bezogen auf eingesetzten dreiwertigen Phosphor: 76,9 %.
Unter Berucksichtigung des ebenfalls verwertbaren (C₄H₉)₂POCH₃: 89,0 %.

### Beispiel 4

Es wird verfahren wie in Beispiel 1 beschrieben, mit folgenden Änderungen:
15,3 g Cl₂POCH₃ (97,5%ig = 0,112 mol), welches aus der Umsetzung von PCl₃ mit CH₃OH unter Abführung von HCl gewonnen wurde, und 1 g Hexamethylphosphorsäuretrisamid werden vorgelegt, bei konstant gehaltenen +40 °C 14,2 g P(OCH₃)₃ (98%ig = 0,112 mol) zugetropft, 1 Stunde unter Rühren bei +40 °C gehalten, auf -20 °C abgekühlt, 100 g Diethylenglykoldimethylether zugegeben, bei -20 °C 91,4 g Lösung, die 30 Gew.-% CH₃MgBr (= 27,43 g = 0,23 mol) in Tetrahydrofuran gelöst, enthält, innerhalb 1 Stunde zugetropft, eine weitere Stunde unter Erwärmung auf +20 °C weiter gerührt und, wie in Beispiel 1 beschrieben, destilliert.

Es werden angewendet:
Auf 1 mol Cl₂POCH₃ 1 mol P(OCH₃)₃.

3,4 Gew.-% Hexamethylphosphorsäuretrisamid, bezogen auf Cl₂POCH₃ + P(OCH₃)₃-Mischung.

Auf 1 Gew.-Teil der zuvor beschriebenen Mischung 3,4 Gew.-Teile Diethylenglykoldimethylether und auf 1 g-Atom an Phosphor gebundenes Chlor 1,025 mol CH₃MgBr.

Es werden 122 g Destillat folgender Zusammensetzung erhalten:
15,2 g CH₃P(OCH₃)₂ (Kp bei 98 kPa circa 88 °C)
1,8 g (CH₃)₂POCH₃ (Kp bei 98 kPa circa 57 °C)
0,25 g P(OCH₃)₃
1,1 g (CH₃)₃P
1,6 g (CH₃)₃PO
63,5 g Tetrahydrofuran
38,5 g Diethylenglykoldimethylether
Ausbeute an CH₃P(OCH₃)₂, bezogen auf eingesetzten dreiwertigen Phosphor: 73,8 %.
Unter Berücksichtigung des rückgewinnbaren P(OCH₃)₃: 74,5 %.

### Beispiel 5

Es wird verfahren wie in Beispiel 1 beschrieben, mit folgenden Änderungen:
56,0 g PCl₃ (98%ig = 0,4 mol) und 3,5 g Hexamethylphosphorsäuretrisamid werden vorgelegt, bei konstant gehaltenen +40 °C 43,8 g P(OC₃H₇-iso)₃ (95%ig = 0,2 mol) zugetropft, insgesamt 2 Stunden unter Rühren bei +40 °C gehalten, auf -40 °C abgekühlt, 300 g Diethylenglykoldimethylether zugegeben, bei -40 °C 341 g Lösung, die 26,4 Gew.-% CH₃MgCl (= 90 g = 1,2 mol) in Tetrahydrofuran gelöst, enthält, zugetropft, dann 258 g Dioxan zugegeben, unter Rühren auf +20 °C erwärmt, der feinkristalline Niederschlag der entstandenen Magnesiumchloriddioxan-Anlagerungsverbindung unter Ausschluß von Luft und Feuchtigkeit abfiltriert, der Filterkuchen mit 52 g Dioxan gewaschen und das Filtrat, wie in Beispiel 1 beschrieben, destilliert.

Es werden angewendet:
Auf 1 mol PCl₃ 0,5 mol P(OC₃H₇-iso)₃.

3,5 Gew.-% Hexamethylphosphorsäuretrisamid, bezogen auf PCl₃ + P(OC₃H₇-iso)₃-Mischung.

Auf 1 Gew.-Teil der zuvor beschriebenen Mischung 3 Gew.-Teile Diethylenglykoldimethylether und auf 1 g-Atom an Phosphor gebundenes Chlor 1 mol CH₃MgCl.

Es werden 573,5 g Destillat folgender Zusammensetzung erhalten:
52,6 g (CH₃)₂POC₃H₇-iso (Kp bei 98 kPa circa 90 °C)
10,0 g CH₃P(OC₃H₇-iso)₂ (Kp bei 98 kPa circa 139 °C)
1,9 g (CH₃)₃P
1,5 g (CH₃)₃PO
88,5 g Dioxan
251,0 g Tetrahydrofuran
168,0 g Diethylenglykoldimethylether
Ausbeute an (CH₃)₂POC₃H₇-iso, bezogen auf eingesetzten dreiwertigen Phosphor: 73,1 %.
Zusammen mit dem ebenfalls verwertbaren CH₃P(OC₃H₇-iso)₂ beträgt die Ausbeute, bezogen auf dreiwertigen Phosphor: 83,3 %.

### Beispiel 6

Es wird verfahren wie in Beispiel 1 beschrieben, mit folgenden Änderungen:
26,2 g P(OCH₃)₃ (98%ig = 0,207 mol) und 1,6 g Hexamethylphosphorsäuretrisamid werden vorgelegt, bei konstant gehaltenen +40 °C 29,0 g PCl₃ (98%ig = 0,207 mol) innerhalb 0,25 Stunden zugetropft, eine weitere Stunde bei +40 °C gerührt, auf -60 °C gekühlt, 472 g Diethylenglykoldimethylether zugegeben, bei -60 °C 183 g Lösung, die 26 Gew.-% CH₃MgCl (= 72,49 g = 0,6202 mol) in Tetrahydrofuran enthält, zugetropft und unter Erwärmung auf +20 °C weitergerührt (Gesamtdauer 2 Stunden) und, wie in Beispiel 1 beschrieben, destilliert.

Es werden angewendet:
Auf 1 mol PCl₃ 1 mol P(OCH₃)₃.

2,9 Gew.-% Hexamethylphosphorsäuretrisamid, bezogen auf PCl₃ + P(OCH₃)₃-Mischung.

Auf 1 Gew.-Teil der zuvor beschriebenen Mischung 8,5 Gew.-Teile Diethylenglykoldimethylether und auf 1 g-Atom an Phosphor gebundenes Chlor 1,02 mol CH₃MgCl.

Es werden 487 g Destillat folgender Zusammensetzung erhalten:
22,0 g CH₃P(OCH₃)₂ (Kp bei 98 kPa circa 88 °C)
12,6 g (CH₃)₂POCH₃
1,4 g P(OCH₃)₃
1,3 g (CH₃)₃P
135,0 g Tetrahydrofuran
314,7 g Diethylenglykoldimethylether
Ausbeute an CH₃P(OCH₃)₂ + (CH₃)₂POCH₃, bezogen auf eingesetzten dreiwertigen Phosphor: 81,9 %.
Unter Berücksichtigung des wiedergewinnbaren P(OCH₃)₃: 84,3 %.

## Patentansprüche

1. Verfahren zur Herstellung von mindestens einer Verbindung der Formel
RₙP(OR′)₃₋ₙ (1),
in der bedeutet
R eine Alkylgruppe mit 1 bis 4 C-Atomen, eine Vinylgruppe oder eine Allylgruppe
R′ eine Alkylgruppe mit 1 bis 4 C-Atomen, eine Chloralkylgruppe mit 2 bis 4 C-Atomen oder eine Bromalkylgruppe mit 2 bis 4 C-Atomen
n = 1 oder 2
durch Reaktion von mindestens einer Verbindung der Formeln
PCl₃ (2)
oder
Cl₂POR′ (3),
oder Mischungen der Verbindungen der Formeln (2) und (3), mit einer Verbindung der Formel
P(OR′)₃ (4),
wobei R′ in den Formeln (3) und (4) die oben angegebene Bedeutung hat, nach Beendigung dieser Reaktion Umsetzung des Reaktionsproduktes oder der Reaktionsprodukte der Formel
ClₙP(OR′)₃₋ₙ (5),
worin R′ und n die oben angegebene Bedeutung haben, mit einer Verbindung der Formel
XMgR (6),
worin X = Cl oder Br bedeutet und R die oben angegebene Bedeutung hat, danach Abtrennung der entstandenen Verbindungen der Formel (1) aus dem Umsetzungsgemisch durch Destillation, dadurch gekennzeichnet, daß je 1 mol der Verbindung (2) 0,5 bis 2,1 mol der Verbindung (4) und/oder je 1 mol der Verbindung (3) 0,1 bis 1,1 mol der Verbindung (4) bei -20 bis +100 °C zur Reaktion gebracht werden, nach Beendigung der Reaktion eine Temperatur von -60 bis +50 °C eingestellt wird, das reaktionsgemisch ohne vorherige Abtrennung und Reinigung eines Reaktionsproduktes unter Aufrechterhaltung der eingestellten Temperatur und intensiver Durchmischung mit 1 bis 1,1 mol einer weitgehend in Lösung vorliegenden Verbindung (6), je 1 g-Atom des im Reaktionsgemisch der Verbindung (4) mit der Verbindung (2) oder der Verbindung (3) oder Mischungen der beiden letztgenannten Verbindungen vorliegenden an Phosphor gebundenen Chlors, in Kontakt gebracht wird, anschließend während 0 bis 3 Stunden die eingestellte Temperatur aufrechterhalten oder auf 10 bis 30 °C eingestellt wird und dann die Abtrennung der entstandenen Verbindung(en) (1) vorgenommen wird.

2. Verfahren nach Anspruch 1, dadurch gekennzeichnet, daß auf 1 Gew.-Teil des Reaktionsgemisches von mindestens einer Verbindung der Formeln PCl₃ oder Cl₂POR′ oder Mischungen dieser mit der Verbindung P(OR′)₃, bevor es in Kontakt mit der Verbindung XMgR kommt, 2 bis 15 Gew.-Teile eines wasserfreien, aprotischen Lösungsmittels zugesetzt werden, dessen Siedepunkt um mindestens 20 °C über dem Siedepunkt der am höchsten siedenden herzustellenden Verbindung RₙP(OR′)₃₋ₙ liegt.

3. Verfahren nach Anspruch 1 oder 2, dadurch gekennzeichnet, daß die Reaktion von mindestens einer Verbindung der Formeln PCl₃ oder Cl₂POR′ oder Mischungen dieser mit der Verbindung der Formel P(OR′)₃ in Gegenwart von 1 bis 10 Gew.-%, bezogen auf die Summe der Verbindungen PCl₃ + Cl₂POR′ + P(OR′)₃, von mindestens einer Verbindung der Formel 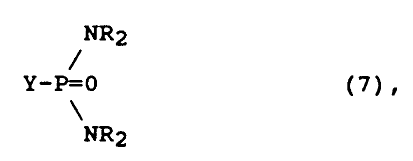 in der bedeuten,
Y = Alkyl mit 1 bis 6 C-Atomen, Phenyl oder NR₂
R = Alkyl mit 1 bis 4 C-Atomen, wobei R₂ auch ein Butylen-(1,4)-Radikal bedeuten kann,
durchgeführt wird.

4. Verfahren nach einem oder mehreren der Ansprüche 1 bis 3, dadurch gekennzeichnet, daß eine Verbindung der Formel P(OR′)₃ eingesetzt wird, in der R′ eine Alkylgruppe mit 1 bis 4 C-Atomen oder eine 2-Chlorethyl-Gruppe bedeutet.

5. Verfahren nach einem oder mehreren der Ansprüche 1 bis 4, dadurch gekennzeichnet, daß eine Verbindung der Formel XMgR eingesetzt wird, in der bedeuten X = Cl oder Br und R = Methyl- oder Ethyl-.

6. Verfahren nach einem oder mehreren der Ansprüche 1 bis 5, dadurch gekennzeichnet, daß die Verbindung der Formel XMgR in Tetrahydrofuran gelöst ist.

7. Verfahren nach einem oder mehreren der Ansprüche 1 bis 6, dadurch gekennzeichnet, daß die Reaktion von mindestens einer Verbindung der Formeln PCl₃ oder Cl₂POR′ oder Mischungen dieser mit P(OR′)₃ bei einer Temperatur von +20 bis +50°C durchgeführt wird.

8. Verfahren nach einem oder mehreren der Ansprüche 1 bis 7, dadurch gekennzeichnet, daß die Umsetzung der Verbindung der Formel XMgR mit dem Reaktionsgemisch von mindestens einer Verbindung der Formeln PCl₃ oder Cl₂POR′ oder Mischungen dieser mit P(OR′)₃ bei einer Temperatur von -20 bis +20 °C durchgeführt wird.

## Claims

1. A process for the preparation of at least one compound of the formula
RₙP(OR')₃₋ₙ (1)
in which
R is an alkyl group having 1 to 4 carbon atoms, a vinyl group or an allyl group,
R' is an alkyl group having 1 to 4 carbon atoms, a chloroalkyl group having 2 to 4 carbon atoms or a bromoalkyl group having 2 to 4 carbon atoms and
n = 1 or 2
by reacting at least one compound of the formulae
PCl₃ (2)
or
Cl₂POR' (3)
or mixtures of the compounds of the formulae (2) and (3), with a compound of the formula
P(OR')₃ (4)
where R' in the formulae (3) and (4) has the abovementioned meaning, after completion of this reaction reacting the reaction product or the reaction products of the formula
ClₙP(OR')₃₋ₙ (5)
in which R' and n have the abovementioned meaning, with a compound of the formula
XMgR (6)
in which X is Cl or Br and R has the abovementioned meaning, then separating off the resulting compounds of the formula (I) from the reaction mixture by distillation, which comprises bringing 0.5 to 2.1 moles of the compound (4) per mole of the compound (2) and/or 0.1 to 1.1 moles of the compound (4) per mole of the compound (3) to reaction at -20 to +100°C, adjusting the temperature to -60 to +50°C after completion of the reaction, bringing the reaction mixture into contact, without prior separation and purification of a reaction product, with 1 to 1.1 moles of a compound (6), which is substantially present in solution, per g atom of chlorine bonded to phosphorus in the reaction mixture of the compound (4) with the compound (2) or the compound (3) or mixtures of the two last-mentioned compounds while maintaining the set temperature and mixing intensively, then maintaining the set temperature, or adjusting it to 10 to 30°C, for 0 to 3 hours and then separating off the compound(s) (1) formed.

2. The process as claimed in claim 1, wherein 2 to 15 parts by weight of an anhydrous aprotic solvent whose boiling point is at least 20°C above the boiling point of the highest-boiling compound RₙP(OR')₃₋ₙ to be prepared are added per 1 part by weight of the reaction mixture of at least one compound of the formulae PCl₃ or Cl₂POR' or mixtures of these with the compound P(OR')₃, before said mixture comes into contact with the compound XMgR.

3. The process as claimed in claim 1 or 2, wherein the reaction of at least one compound of the formulae PCl₃ or Cl₂POR' or mixtures of these with the compound of the formula P(OR')₃ is carried out in the presence of 1 to 10 % by weight, based on the total of the compounds PCl₃ + Cl₂POR' + P(OR')₃, of at least one compound of the formula 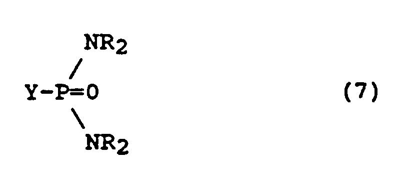 in which
Y is alkyl having 1 to 6 carbon atoms, phenyl or NR₂ and
R is alkyl having 1 to 4 carbon atoms, where R₂ may also be a 1,4-butylene radical.

4. The process as claimed in one or more of claims 1 to 3, wherein a compound of the formula P(OR')₃ is employed in which R' is an alkyl group having 1 to 4 carbon atoms or a 2-chloroethyl group.

5. The process as claimed in one or more of claims 1 to 4, wherein a compound of the formula XMgR is employed in which X is Cl or Br and R is methyl or ethyl.

6. The process as claimed in one or more of claims 1 to 5, wherein the compound of the formula XMgR is dissolved in tetrahydrofuran.

7. The process as claimed in one or more of claims 1 to 6, wherein the reaction of at least one compound of the formulae PCl₃ or Cl₂POR' or mixtures of these with P(OR')₃ is carried out at a temperature of +20 to +50°C.

8. The process as claimed in one or more of claims 1 to 7, wherein the reaction of the compound of the formula XMgR with the reaction mixture of at least one compound of the formulae PCl₃ or Cl₂POR' or mixtures of these with P(OR')₃ is carried out at a temperature of -20 to +20°C.

## Revendications

1. Procédé pour préparer au moins un composé de formule
RₙP(OR')₃₋ₙ (1)
dans laquelle
R est un groupe alkyle ayant de 1 à 4 atomes de carbone, un groupe vinyle ou un groupe allyle,
R' est un groupe alkyle ayant de 1 à 4 atomes de carbone, un groupe chloralkyle ayant de 2 à 4 atomes de carbone ou un groupe bromalkyle ayant de 2 à 4 atomes de carbone,
n = 1 ou 2,
par la réaction d'au moins un composé ayant les formules
PCl₃ (2)
ou
Cl₂POR' (3),
ou des mélanges des composés des formules (2) et (3), avec un composé de formule
P(OR')₃ (4),
où R', dans les formules (3) et (4), a les significations données ci-dessus, puis, quand cette réaction est terminée, par la réaction du produit ou des produits de réaction de formule
ClₙP(OR')₃₋ₙ (5)
dans laquelle R' et n ont les significations données ci-dessus, avec un composé de formule
XMgR (6)
où X est Cl ou Br, et R a les significations données ci-dessus, puis séparation par distillation, à partir du mélange réactionnel, des composés de formule (1) ainsi obtenus, caractérisé en ce que l'on fait réagir, par mole du composé (2), de 0,5 à 2,1 mol du composé (4) et/ou par mole du composé (3), de 0,1 à 1,1 mol du composé (4) à une température de -20 à +100°C, puis, quand la réaction est terminée, on ajuste la température à une valeur de -60 à +50°C, on met en contact le mélange réactionnel, sans séparation et purification préalables d'un produit de réaction, tout en maintenant la température ajustée et en procédant à un mélange intime avec une quantité de 1 à 1,1 mol d'un composé (6) essentiellement en solution, par atome-gramme de chlore lié au phosphore, présent avec le composé (2) ou le composé (3) ou des mélanges de ces deux derniers composés, puis, pendant un laps de temps de 0 à 3 heures, on maintient la température déjà ajustée ou encore on l'ajuste à une valeur de 10 à 30°C, puis on procède à la séparation du ou des composés (1) obtenus.

2. Procédé selon la revendication 1, caractérisé en ce que, par partie en poids du mélange réactionnel d'au moins un composé de formules PCl₃ ou Cl₂POR' ou de mélanges de ce dernier avec un composé P(OR')₃, et avant qu'il entre en contact avec le composé XMgR, on ajoute une quantité de 2 à 15 parties en poids d'un solvant aprotique anhydre dont le point d'ébullition est d'au moins 20°C supérieur au point d'ébullition du composé à préparer, ayant le point d'ébullition le plus haut, RₙP(OR')₃₋ₙ.

3. Procédé selon la revendication 1 ou 2, caractérisé en ce que la réaction d'au moins un composé de formules PCl₃ ou Cl₂POR', ou de mélanges de ces derniers, avec le composé de formule P(OR')₃ s'effectue en présence de 1 à 10 % en poids, par rapport au total des composés PCl₃ + Cl₂POR' + P(OR')₃, d'au moins un composé de formule 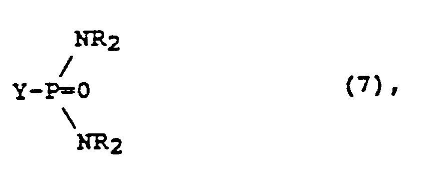 dans laquelle
Y est un radical alkyle ayant de 1 à 6 atomes de carbone, phényle ou NR₂,
R est un radical alkyle ayant de 1 à 4 atomes de carbone, R₂ pouvant être aussi un radical butylène(1,4).

4. Procédé selon l'une ou plusieurs des revendications 1 à 3, caractérisé en ce qu'on utilise un composé de formule P(OR')₃ où R' est un groupe alkyle ayant de 1 à 4 atomes de carbone ou 2-chloroéthyle.

5. Procédé selon l'une ou plusieurs des revendications 1 à 4, caractérisé en ce qu'on utilise un composé de formule XMgR dans laquelle X est Cl ou Br et R est un radical méthyle ou éthyle.

6. Procédé selon l'une ou plusieurs des revendications 1 à 5, caractérisé en ce que le composé de formule XMgR est en solution dans le tétrahydrofuranne.

7. Procédé selon l'une ou plusieurs des revendications 1 à 6, caractérisé en ce que la réaction d'au moins un composé de formule PCl₃ ou Cl₂POR', ou de mélanges de ces derniers avec du P(OR')₃, est mis en oeuvre à une température de +20 à +50°C.

8. Procédé selon l'une ou plusieurs des revendications 1 à 7, caractérisé en ce que la réaction du composé de formule XMgR avec le mélange réactionnel d'au moins un composé de formules PCl₃ ou Cl₂POR' ou de mélanges de ces derniers avec du P(OR')₃, est mis en oeuvre à une température de -20 à +20°C.
